# EUROPEAN PATENT APPLICATION

(11) **EP 0 818 690 A2**
(43) Date of publication of application: **14.01.1998**
(21) Application number: 97305035.4
(22) Date of filing: 08.07.1997
(51) Int. Cl.: G01S 5/14

(54) **Portable DGPS receiver**

(30) Priority: 09.07.1996 JP 179402/96
(71) Applicant: HARADA INDUSTRY CO., LTD., Shinagawa-ku Tokyo (JP)
(72) Inventor: Imamura, Yutaka, Asahi-ku, Yokohama-shi (JP); Inoue, Hidemichi, Inagi-shi, Tokyo (JP); Endo, Hiroshi, Ota-ku, Tokyo (JP)
(74) Representative: Crawford, Andrew Birkby

(57) **Abstract**

A portable DGPS receiver has a body having a notebook type foldable case, which has a liquid crystal display (11) mounted on a part (10A) of the foldable case (10) and various operation keys (12) attached to the other part (10B) of the foldable case and which permits a map storage IC card (13) to be detachably loaded into the foldable case, a GPS antenna (14) accommodated in the foldable case of the body and capable of receiving GPS waves transmitted from an artificial satellite, a GPS receiver for obtaining position data of a subject from received information, a unit for calculating the position of the subject in accordance with obtained position data to display the position such that the position is superimposed on the position and a local area image read from the card, an antenna for to a differential reception mode, detachably mounted on the case and capable of receiving position correction data supplied from a reference station and a position correction receiver (31) for correcting position data in accordance with received position correction data.

## Description

The present invention relates to a portable DGPS receiver which can always be carried by a user while being put in a pocket of clothes or the like and adapted to a differential method. More particularly, the present invention relates to a portable DGPS receiver enabling a user to easily confirm the position thereof or a destined position required for the user to enjoy leisure time (to enjoy hiking, orienteering, a travel, mountain climbing, cycling or the like), for business, and event attendance for a housewife and/or children and thus serving as a portable device which is effective to prevent a lost child or for use in an emergency case.

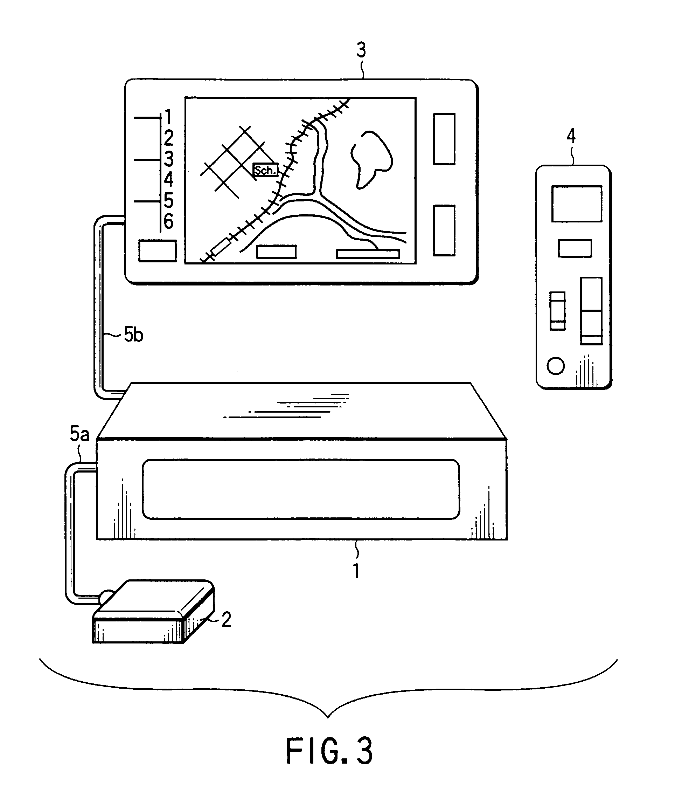

FIG. 3 is a perspective view showing the shape of a GPS receiver for an automobile which has been known as a car navigator.

Referring to FIG. 3, reference numeral 1 represents a car computer unit including a GPS receiver, a display processor, a CD-ROM player, an internal/ external signal processing unit and the like. Reference numeral 2 represents a GPS antenna, 3 represents a liquid crystal display, 4 represents a key operation commander, and 5a and 5b represent connection cables.

Since the conventional GPS receiver for an automobile comprises a plurality (four in this case) of independent elements each having a relatively large size, the conventional GPS receiver for an automobile is not suitable as a portable device. Since the GPS receiver for an automobile consumes a relatively large quantity of electric power (12 V x 0.5 A) for the overall system thereof, a large-capacity battery is required. Because of the above-mentioned viewpoint, the conventional device is not suitable as a portable device. What is worse, the cost of the system cannot be reduced. If a so-called differential method is employed, an antenna and the like required for the differential method must be provided additionally. Therefore, the size is enlarged and the structure is complicated. As a result, there arises a problem in that the conventional device cannot easily be operated.

An object of the present invention is to provide the following portable DGPS receivers:
(a) A portable DGPS receiver which has small size and light weight and which can easily be carried.
(b) A portable DGPS receiver, the cost of which can be reduced to a small fraction of that of a conventional receiver and which can be manufactured with a very low cost.

In order to achieve the above-mentioned objects, according to one aspect of the present invention, there is provided a portable DGPS receiver comprising characterized by comprising: a main unit having a notebook type foldable case having at least two parts coupled with each other in a foldable manner, one of the parts having a liquid crystal display and the other including various operation keys; and a map storage IC card to be detachably loaded into the foldable case; wherein the foldable case contains: a patch type GPS antenna capable of receiving GPS waves transmitted from an artificial satellite; a GPS receiver having an LSI for processing information in the GPS waves received by the patch type GPS antenna to obtain position data of a subject; a processing unit having an LSI for calculating the position of the subject in accordance with position data obtained by the GPS receiver; a display drive unit for making the position of the subject calculated by the processing unit display on the liquid crystal display such that the position calculated is superimposed on a positional image read from the map storage IC card; an antenna for a differential reception mode, which is detachably mounted on the foldable case and capable of receiving position correction data supplied from, at least, a reference station; and a position correction receiver for correcting position data in accordance with position correction data received by the antenna for the differential reception mode.

The invention can be more fully understood from the following detailed description when taken in conjunction with the accompanying drawings, in which:
FIG. 1 is a perspective view showing the structure of a portable DGPS receiver according to a first embodiment of the present invention;
FIGS. 2A and 2B are plan views showing the right and reverse side structures of a multilayered printed circuit board of the portable DGPS receiver according to the first embodiment of the present invention, in which FIGS. 2A and 2B are plan views respectively showing the right side and the reverse side of the multilayered printed circuit board; and
FIG. 3 is a perspective view showing the shape of a conventional GPS receiver (a car navigation system) for an automobile.

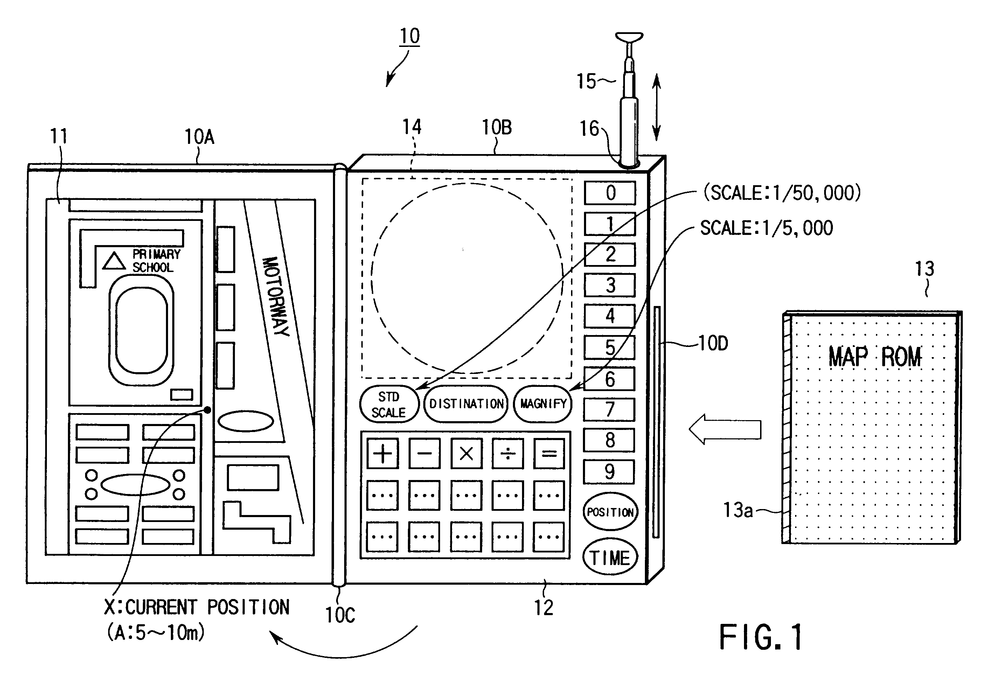

FIG. 1 is a perspective view showing the structure of a portable DGPS receiver according to a first embodiment of the present invention. As shown in FIG. 1, the body of the portable DGPS receiver 10 is structured such that a liquid crystal display 11 capable of displaying a color image is mounted on the inner surface of a cover 10A which is one of notebook type foldable cases capable of opening/closing relative to a hinge portion 10C. Moreover, various operation keys 12 (function keys, numeral keys, calculation keys) 12 and the like are mounted on the inner surface of another (main) case 10B. In addition, a map storage IC card 13 is removably mounted on the foldable case. The body of the apparatus has the size corresponding to that of a pocketbook, which is 90 mm by 70 mm and the thickness of which is about 10 mm.

The function keys include a position key, a clock key, numeral keys, a telephone directory key, a calculation/registration key, a shift/search key, a map display scale key (standard scale: 1/50,000 and magnify scale: 1/5,000) and the like. The numeral keys are used to input destination or the like to display the same as well used as ten-keys.

As indicated by a thick arrow, the map storage IC card 13 can removably be inserted into a card insertion opening 10D formed in an end surface of the foldable case. The map storage IC card 13 has a read only memory (ROM) having a storage capacity of, for example, about 4 mega bytes X 8 bit/byte mounted thereon. The foregoing ROM has various local area graphic data (data of maps of, for example, prefectures of Japan (county) and data representing locations of buildings, having a scale of about 1/50,000 and a mesh shape resolution of about 30 m). A multipole connector pin 13a (having about 30 pins) made of conductive rubber, sponge or the like is disposed at terminal for receiving the map storage IC card 13.

A multilayered printed circuit board (not shown in FIG. 1) having, for example, five layers is accommodated in the foldable case. The multilayered printed circuit board has, densely mounted thereon, a patch type GPS antenna 14 capable of receiving GPS waves transmitted from artificial satellites and formed on the board; a GPS receiver (not shown in FIG. 1) arranged to process information of GPS waves arranged to process information contained in the GPS waves received by the GPS antenna 14 so as to obtain position data of a subject (a person or an article carrying the receiver) and comprising an LSI; a processing unit (not shown in FIG. 1) for calculating the position of the subject in accordance with position data obtained by the GPS receiver; and a display drive unit for displaying the position (for example, present position X shown in FIG. 1) of the subject calculated by the processing unit on a screen of a liquid crystal display 11 such that the position of the subject is superimposed on the local area graphic data (that is, a map) read from the ROM of the map storage IC card 13.

Reference numeral 15 represents a telescopic rod antenna for the differential method having a structure formed by slidably connecting a plurality of conductive pipes respectively having different diameters, the rod antenna 15 being, as indicated by an arrow, detachably inserted into an antenna receiving opening 16 formed in the main body 10B of the foldable case. The rod antenna 15 for the differential method is arranged to be capable of receiving position correction data transmitted from, at least a reference station. Position correction data received by the rod antenna 15 for the differential method is processed by a correction data receiver (not shown in FIG. 1) included in the main body 10B so that correction of position data is performed.

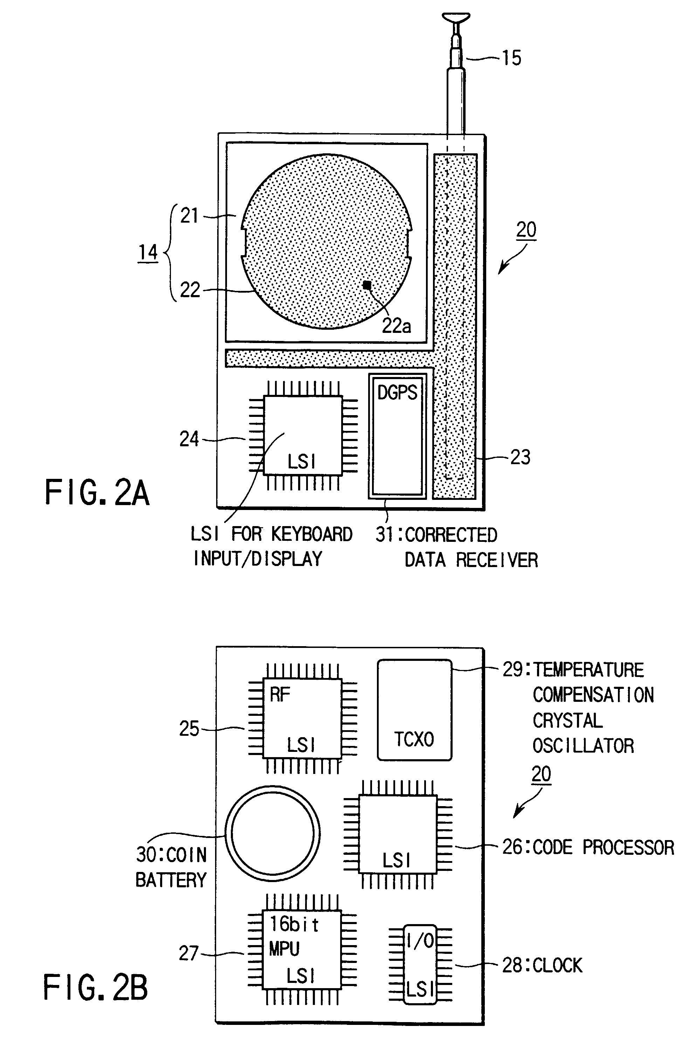

FIGS. 2A and 2B are plan views showing the right and reverse sides of the multilayered printed circuit board 20 accommodated in the foldable case. For example, the multilayered printed circuit board 20 has a structure such that a multiplicity of circuit layers laminated thereon are connected to one another through a conductive passage, called inner via holes arbitrarily formed in the board. The multilayered printed circuit board 20 permits denser mounting as compared with a conventional through hole structure. Moreover, the multilayered printed circuit board 20 cannot easily be affected by noise.

As shown in FIG. 2A, the multilayered printed circuit board 20, on the right side thereof, comprises a dielectric board (for example, an alumina board) 21 having a high dielectric constant and provided with a metal-foil pattern 22 formed thereon and having a substantially circular shape, the diameter of which is about 35 mm to about 45 mm. The metal-foil pattern 22 forms a circular-polarization printed antenna (corresponding to the GPS antenna 14 shown in FIG. 1). The reverse side of the multilayered printed circuit board 20 is substantially completely covered with metal foil so as to be formed into a so-called ground side. A power supply point 22a for supplying electric power to the antenna is formed in a portion of the metal-foil pattern 22. Reference numeral 23 represents a conductive film for a keyboard, and 24 represents an LSI for inputting data by using the keyboard and operating the display. Reference numeral 31 represents a correction data receiver arranged to correct found position data in accordance with position correction data received by the rod antenna 15 for the differential method.

As shown in FIG. 2B, an RF LSI 25 forming an essential portion of the GPS receiver, a code processor LSI 26 for processing codes, an MPU LSI 27 for calculating the satellite orbits, performing calculations for obtaining the position, converting the coordinates of the geodetic system, an LSI 28 for a calendar and a clock, a temperature compensation crystal oscillator 29 and a battery 30 such as a secondary battery, for example, a coin battery, a dry cell, a NiCd battery or the like are mounted on the reverse side of the multilayered printed circuit board 20.

As described above, the portable DGPS receiver according to this embodiment has the notebook type foldable case having the size corresponding to that of a pocketbook when the case is folded, the foldable case being the body of the receiver. Moreover, the large-size liquid crystal display 11 having a screen, the size of which is substantially the same as the area of the inner surface of the cover 10A, is attached to the inner surface of the cover 10A. In addition, the various operation keys 12 serving as a commander for operating the apparatus are integrally mounted on the inner surface of the main body 10B. The main body 10B includes the multilayered printed circuit board 20 having the GPS antenna 14, the GPS receiver, the processing unit and the like mounted densely. In addition, the map storage IC card 13, such as a predetermined map card, a location card or the like, is detachably loaded into the main body 10B of the foldable case.

Therefore, the portable DGPS receiver 10 has a significantly small size, foldable structure and light weight. Therefore, the portable DGPS receiver 10 can be placed in a pocket or the like of the jacket or a shirt and carried significantly easily. When the present position of the user is required to be detected, the portable DGPS receiver 10 is placed on the hand, and then the cover 10A is opened. In a state where the portable DGPS receiver 10 is placed horizontally, a required map storage IC card 13 is loaded into the portable DGPS receiver 10 to cause a position finding calculation to be performed for 30 seconds. As a result, a required map or the like having a standard scale (1/50,000) or an enlarged scale (1/5,000) is displayed on the screen of the liquid crystal display 11. Moreover, the present position of the user detected in accordance with the position data is displayed on the map such that the position of the user is superimposed on the map (for example, color blinking display is performed). Thus, the user is able to detect the present position and thus smoothly reach the destination.

Since the printed GPS antenna 14, the multilayered printed circuit board 20 having a plurality of LSIs mounted thereon and the small-size liquid crystal display 11 can be available with low costs, the cost for manufacturing the apparatus according to the present invention can be reduced to a small fraction of that required to manufacture the conventional apparatus. As a result, the apparatus according to the present invention can be provided with a low cost.

Moreover, the apparatus according to the present invention has the clock arranged to be operated by using the output from the included crystal oscillator 29 as clock pulses thereof. The time of the clock can be corrected with information of an atomic clock included in the GPS waves so that corrected time is displayed. Therefore, time of the clock can be corrected significantly accurately and accurate standard time (the world time expressed in the form of Japanese time) can be detected at any time.

### Modification

- The portable DGPS receiver according to the foregoing embodiment includes the following modification.
- A structure having a foldable FM multiple broadcast radio tuner integrated therewith;
- A structure having a portable telephone integrated therewith;
- A structure detachably mounted on a portion of a mobile apparatus, such as an automobile or a motorbike; and
- A structure connected to a notebook type personal computer so that local area graphic data and found position data are clearly displayed with an enlarged magnification on a large display of the computer so as to be monitored.

According to the present invention, the following portable DGPS receiver can be provided:
(a) A portable DGPS receiver having small size and light weight and serving as a significantly convenient device.
(b) A portable DGPS receiver, the cost of which can be reduced to a small fraction of that of the conventional receiver, and which can be manufactured with a significantly reduced cost.

## Claims

1. A portable DGPS receiving apparatus characterized by comprising:
a main unit (10) having a notebook type foldable case having at least two parts (10A, 10B) coupled with each other in a foldable manner, one (10A) of said parts having a liquid crystal display (11) and the other including various operation keys (12); and
a map storage IC card (13) to be detachably loaded into the foldable case; wherein
said foldable case contains:
a patch type GPS antenna (14) capable of receiving GPS waves transmitted from an artificial satellite;
a GPS receiver having an LSI for processing information in the GPS waves received by said patch type GPS antenna to obtain position data of a subject;
a processing unit having an LSI for calculating the position of the subject in accordance with position data obtained by said GPS receiver;
a display drive unit (24) for making the position of the subject calculated by said processing unit display on said liquid crystal display such that the position calculated is superimposed on a positional image read from said map storage IC card;
an antenna (15) for a differential reception mode, which is detachably mounted on said foldable case and capable of receiving position correction data supplied from, at least, a reference station; and
a position correction receiver (31) for correcting position data in accordance with position correction data received by said antenna for the differential reception mode.

2. An apparatus according to claim 1, wherein said the other (10B) of said parts of said foldable case has a card insertion opening (10D), and said map storage IC card includes a read only memory storing various local area graphic data.

3. An apparatus according to claim 1, characterized in that said the other (10B) of said parts of said foldable case comprises a multilayered printed circuit board (20) having a multiplicity of circuit layers laminated on a board and connected to each other through a conductive passage, called inner via holes arbitrarily formed in said board.

4. An apparatus according to claim 3, characterized in that said multilayered printed circuit board (20) is formed of a dielectric board having a front surface provided with a circular metal-foil (22), and serving as said GPS antenna (14).

5. An apparatus according to claim 4, characterized in that said multilayered printed circuit board (20) has a back surface on which an RF LSI forming an essential portion of said GPS receiver, a code processing LSI for processing codes, an MPU LSI for calculating satellite orbits, performing calculations for obtaining the position, converting the coordinates of a geodetic system, an LSI for a calendar and a clock, a temperature compensation crystal oscillator and a battery are mounted.

6. An apparatus according to claim 1, characterized in that said one (10A) of said parts functions as a cover when the foldable case is folded.

7. An apparatus according to claim 6, characterized in that said liquid crystal display (11) has a screen of a size which is substantially the same as a surface area of said cover (10A).
